# EUROPEAN PATENT SPECIFICATION

(11) **EP 3 598 022 B1**
(45) Date of publication and mention of the grant of the patent: **15.10.2025**
(21) Application number: 18768434.5
(22) Date of filing: 13.02.2018
(51) Int. Cl.: F24S 40/20, H02S 40/10

(54) **SYSTEM, VEHICLE AND METHOD FOR CLEANING PARABOLIC TROUGHS, HELIOSTATS AND PHOTOVOLTAIC PANELS**
SYSTEM, FAHRZEUG UND VERFAHREN ZUR REINIGUNG VON PARABOLRINNEN, HELIOSTATEN UND FOTOVOLTAIKPANEELEN
SYSTÈME, VÉHICULE ET PROCÉDÉ DE NETTOYAGE DE COLLECTEURS CYLINDRIQUES PARABOLIQUES, D'HÉLIOSTATS ET DE PANNEAUX PHOTOVOLTAÏQUES

(30) Priority: 16.03.2017 ES 201730349
(43) Date of publication of application: 22.01.2020
(73) Proprietor: Abengoa Solar New Tecnologies, S.A., 41014 Sevilla (ES)
(72) Inventor: ESCACENA GUTIERREZ, José, 41014 Sevilla (ES); CARMONA CASADO, Fernando, 41014 Sevilla (ES)
(74) Representative: Ungria López, Javier
(86) International application number: PCT/ES2018/070100
(87) International publication number: WO 2018/167340

(56) References cited:
- EP-A1- 2 153 914
- WO-A1-2012/111866
- WO-A1-2014/034985
- WO-A1-2015/007105
- WO-A1-2016/152449
- WO-A1-2016/185078
- CN-U- 203 911 860
- DE-A1- 102011 052 534
- DE-U1- 202006 003 697
- JP-A- 2000 301 035
- JP-A- 2000 301 035
- JP-A- 2014 121 680
- KR-A- 20120 041 497
- US-A1- 2015 082 559
- US-A1- 2016 178 241
- DATABASE WPI Derwent World Patents Index; AN 2014-A07630
- DATABASE WPI Derwent World Patents Index; AN 2014-M23037, RECUPERADO
- DATABASE WPI Derwent World Patents Index; AN 2016-61294Q

## Description

### Object of the invention

The object of the presen t invention is a cleaning system that can be used in solar plants, both in thermosolar plants of parabolic trough collectors or heliostats and in plants of photovoltaic solar panels or photovoltaic trackers. This cleaning system is mounted on a vehicle and comprises an arm that places the cleaning elements in continuous contact and with constant pressure on the reflective surface of said parabolic trough collectors and heliostats or on the surface of the photovoltaic panels or trackers themselves.

### State of the art

There are multiple devices in the state of the art which aim to clean mirrored surfaces or photovoltaic panels. In general, the solutions known in the state of the art for cleaning parabolic trough collectors are designed based on a mobile vehicle with an extendable arm and a plurality of rotating rollers at the ends thereof. However, these solutions have two technical problems that must be solved:
a) A first technical problem lies precisely in the very kinematics of the arm assembly. The rotating rollers have a considerable weight, which, furthermore, is concentrated at the end of the arm, which in turn implies:
   a. The need for robust control to maintain the optimal cleaning distance for the rotating rollers. An error in controlling the distance may imply:
      i. When the distance is very short, the rollers damage the reflective surface of the parabolic trough collector.
      ii. When the distance is very long, the rollers do not perform their cleaning function.
   b. The oversizing of the elements making up the cleaning arm, since it needs to be a much more robust element in order to support the weight at the far end of the base.
b) A second technical problem lies in the very configuration of the rollers that, by volume and size, tend to get very easily hooked on the structure of the parabolic trough collector causing breakage therein and in the rollers themselves.
c) A third technical problem lies in the linear cleaning speed of the vehicle. With current brush systems, the linear cleaning speed is limited by the rotational speed of the brush.

To solve these problems, different solutions have been contemplated, such as for example, patent application ES2316317A1 which protects a parabolic trough collector cleaning device consisting of a moving vehicle, with a water spraying structure, a brush with a mirror-like profile and an air projecting device. Moreover, patent application US20110094542 describes a cleaning vehicle that uses silicone rollers or profiles and steam to clean surfaces, but it is a very slow element due to the need to generate steam.

Other documents that attempt to solve the problems derived from the rotating rollers are WO 2012/004435 the cleaning element of which is water spray, without cleaning elements (which implies a lower cleaning capacity), and document WO 2015/114391 which can use fixed brushes, although said solution does not improve the problem of the moving speed of the vehicle. Finally, document WO 2011/106665 which, despite describing a system to protect wildlife in heliostat fields, describes a direct contact cleaning system, although without specifying the structure of those cleaning means.

Document US 2016/178241 A1 discloses a cleaning system according to the preamble of claim 1.

Therefore, a cleaning device that can solve the technical problems described, increasing the speed of cleaning in the fields of solar trackers, is necessary.

### Description of the invention

The present invention describes a system, vehicle and method for cleaning in solar plants such as heliostats, parabolic trough collectors, photovoltaic trackers and photovoltaic panels that enable doubling the speeds that are reached in trucks which currently exist, reaching up to 6 km/h. All this is carried out according to the independent claims that accompany the present specification. Furthermore, particular embodiments of the invention are described in the dependent claims.

More specifically, the present invention describes a cleaning system arranged for cleaning parabolic trough collectors, heliostats and photovoltaic panels comprising a support structure configured to be supported by an arc connected to one end of a crane, a bearing profile consisting of an inner portion in which a plurality of water conduits is arranged, and a plurality of sweeping elements located on the outer portion of the bearing profile, wherein the cleaning is carried out by dragging and not in a floating manner, such that said cleaning system is always in contact with the dirty surface of the parabolic trough collector, heliostat or photovoltaic panel. The cleaning system further comprises a side shield attached to the bearing profile that enables obstacles to be overcome, wherein a first group of sweeping elements is configured to clean and drag dirt while a second group of sweeping elements located next to the first group of sweeping elements is configured to dry the surface of the solar tracker or photovoltaic panel. The sweeping elements comprise at least one elastomer, or one elastic element or a combination thereof, and between the first group of sweeping elements and the second group of sweeping elements there is an air diffuser connected to an air duct located inside the bearing profile. This cleaning system, moreover, is attached to a bearing or support structure integrally attached to one end of a crane that extends from a cleaning vehicle arranged for this purpose. In a particular embodiment, the bearing profile is curved and is configured to clean parabolic trough collectors.

In general, thanks to the present invention, a faster cleaning speed is achieved, which implies greater homogeneity of the solar field (mirrors with similar coefficient of reflectivity after cleaning). In addition, high efficiency is obtained because, as there is no dirty water waste, high performance rates are achieved, caused by high reflectivity in the fields of parabolic collectors and heliostats or by the improvement in radiation absorption in photovoltaic panels and solar trackers. Furthermore, the cleaning is carried out by dragging and not in a floating manner, i.e., the cleaning system is always in contact with the surface of the solar trackers or photovoltaic panels which enables small obstacles or protrusions to be skipped quickly and without the need for the control system to operate and without additional sensors. Finally, the cleaning element is lighter, which reduces the consequences of breakage or damage in the event of impact with the heliostat itself, the structure of the parabolic trough collector, the photovoltaic tracker or the photovoltaic panel. In addition, the presence of lighter elements enables the instrumentation systems to operate more quickly.

Throughout the description and the claims, the word "comprises" and its variants are not intended to exclude other technical features, additives, components or steps. For those skilled in the art, other objects, advantages and features of the invention may be deduced from both the description and the practical use of the invention. The following examples are provided by way of illustration and are not intended to be limiting of the present invention. Furthermore, the present invention covers all of the possible combinations of preferred and particular embodiments indicated herein.

### Brief description of the figures

What follows is a very brief description of a series of drawings that aid in better understanding the invention, and which are expressly related to an embodiment of said invention that are presented by way of a non-limiting example of the same.
FIGURE 1 shows a first embodiment of a solar collector cleaning vehicle according to the present invention.
FIGURE 2 shows a second embodiment of the cleaning vehicle according to the present invention.
FIGURE 3 shows a third embodiment of the cleaning vehicle according to the present invention.
FIGURE 4 shows a fourth embodiment of the cleaning vehicle according to the present invention.
FIGURE 5 shows a particular embodiment of the cleaning system object of the present invention.
FIGURE 6 shows an alternative embodiment of the cleaning system object of the present invention.
FIGURE 7A shows a detail view of an embodiment of the articulated cylinder mechanism (4) which is contracted.
FIGURE 7B shows a detail view of an embodiment of the cylinder articulated mechanism (4) which is extended.
FIGURE 8 shows a detail view of an alternative embodiment of the articulated cylinder mechanism (4).
FIGURE 9 shows an isometric view of the cleaning system.

In the figures indicated above, and in order to facilitate the understanding of the detailed description of the invention that follows, the following numerical references have been used.
1. Tractor vehicle
2. Crane
3. Arc of the support structure
4. Articulated mechanism
5. Cleaning system
   51. Curved bearing profile of the cleaning system
   52. Water conduit of the cleaning system
   53a, 53b, 53c. Sweeping elements of the cleaning system
   54. Side shield of the cleaning system
   55. Water sprayer of the cleaning system
   56. Water diffuser of the cleaning system
   57. Water conduit of the cleaning system
   58. Air diffuser of the cleaning system
   59. Air duct of the cleaning system
   60a, 60b, 60c. Elastic elements of the cleaning system that support the elastomer
   61a, 61b, 61c. Elastomers of the cleaning system
   h. Elastomer height
   62. Springs
6. Pneumatic cylinder
7. Elastic element or spring
8. Water tank of the vehicle
9. Air generator of the vehicle
10. Rotary actuator

### Description of a detailed embodiment of the invention

As can be seen in the attached figures, the cleaning system (5) which comprises the invention is a system that enables cleaning to be carried out by dragging and not in a floating manner, i.e., the cleaning system (5) is always in contact with the surface of the solar trackers or photovoltaic panels, which enables small obstacles or protrusions to be skipped quickly and without the need for the control system to operate and without the need for additional sensors.

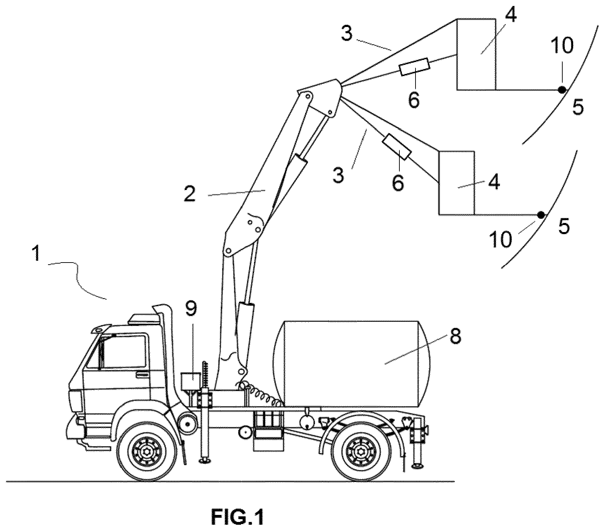

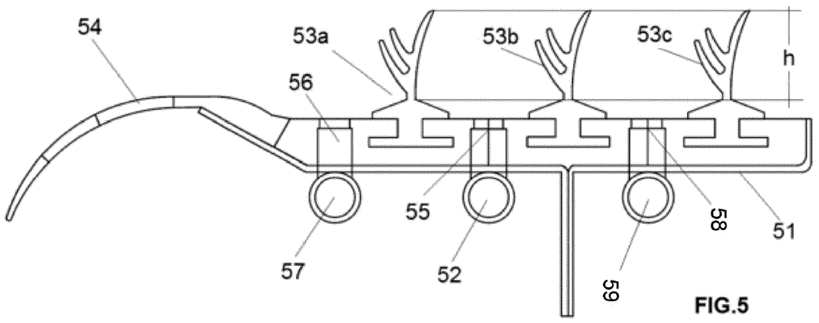

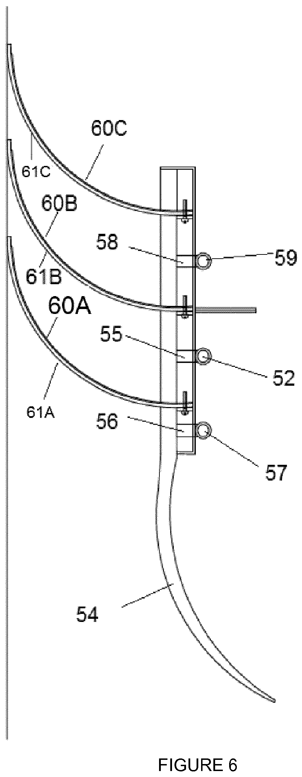

The invention, in its various embodiments shown in Figures 1 to 4, can be used to clean the mirrors of solar parabolic trough collectors, and is formed by a tractor vehicle (1) with a support structure (3, 4, 6, 7, 10) which is integrally attached to the free end of a crane (2) located in the tractor vehicle (1) itself and wherein, in turn, said support structure is the bearing structure of at least one cleaning system (5), shown in greater detail, but not in a limiting manner, in Figure 5 or, alternatively, Figure 6. In the support structure, prior to the cleaning system (5), there is a rotary actuator (10) that enables the cleaning system (5) to rotate slightly on the central support, if necessary.

The cleaning system (5) has sweeping elements (53a, 53b, 53c) and a side shield (54) that enable cleaning to be carried out by dragging and speed to be increased, since the sweeping elements (53a, 53b, 53c) absorb mechanical disturbances and the shield (54) prevents these disturbances from being greater. The sweeping element (53a, 53b or 53c) may consist of an assembly of elastic elements (60a, 60b or 60c) that support the elastomers (61a, 61b or 61c), or a combination of both. The elastic elements (60a, 60b or 60c) can be bands or springs (62) that are manufactured, in a non-limiting manner, from a material selected from: tempered carbon steel, stainless steel alloys, copper-beryllium alloys, or a combination thereof. Moreover, the elastomers (61a, 61b or 61c) are manufactured, in a non-limiting manner, from a material selected from: rubbers (for example, EPDM or TPE), polyurethanes in various densities, EVA foam, silicones, or a combination thereof.

Furthermore, the support structure (3, 4, 6, 7, 10) enables the cleaning system (5) to always be in contact with the surface of the solar trackers or photovoltaic panels, which enables small obstacles or protrusions to be skipped quickly and without the need for the control system to operate and without the need for additional sensors. In addition, the support structure (3, 4, 6, 7, 10) has a dual function:
a) to respond quickly and without the need for instrumentation and
b) to keep the sweeping elements (53a, 53b, 53c) in contact with the surface of the solar trackers or photovoltaic panels in the different embodiments that make up the object of the present invention.

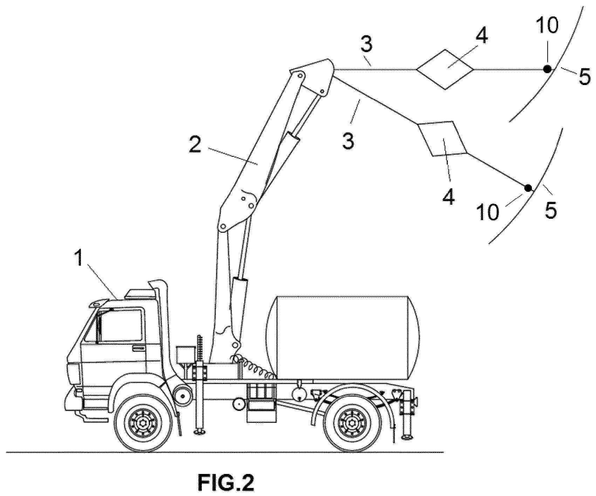

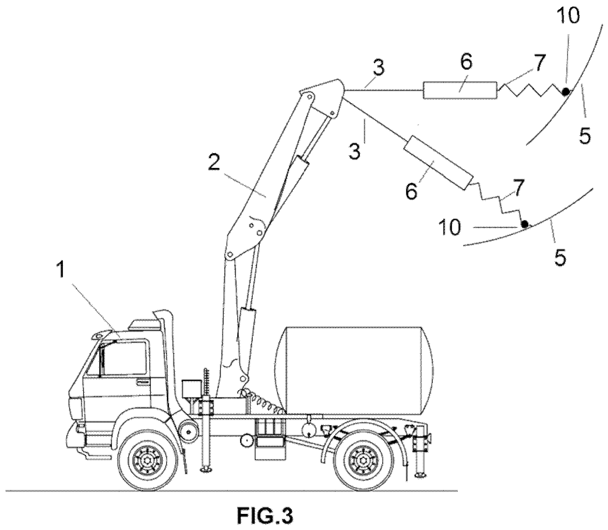

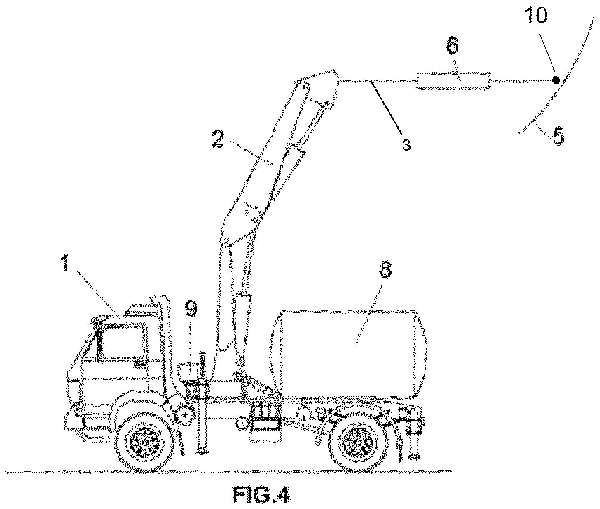

In general, and in common to all possible embodiments of the invention, the cleaning system comprises sweeping elements (53a, 53b, 53c) which also enables slight damping, a side shield (54) and a bearing structure or support structure (3, 4, 6, 7, 10) that has different practical embodiments, as mentioned previously. Thus, and more specifically, the practical embodiments are as follows:
a) A first practical embodiment wherein the support structure is formed by at least one pneumatic cylinder (6) combined with at least one articulated mechanism (4), shown in Figure 1.
b) A second embodiment with at least one articulated mechanism (4), shown in Figure 2.
c) A third embodiment comprising at least one pneumatic cylinder (6) and at least one elastic element (7), shown in Figure 3.
d) A fourth embodiment with at least one pneumatic cylinder (6), shown in Figure 4.

In the first and second embodiment, the articulated mechanism (4) can be, in one particular embodiment, an extendable scissor mechanism.

Lastly, in the different embodiments, the vehicle additionally has a water tank (8) and optionally an air blower or generator (9) to facilitate drying.

This invention, in a further particular embodiment, has advantages over the different systems described in the state of the art, since the cleaning system has drying elements (58, 59) integrated in a cleaning system (5), such that the surface of the mirror is cleaned and dried in a single pass. This also occurs at a faster speed which allows for a more homogeneous solar field (mirrors with similar coefficient of reflectivity after cleaning), which directly affects the operation of the field and with it, efficiency. The cleaning fluid used is preferably water.

The invention, in its first embodiment (FIG. 1), is formed by a cleaning vehicle formed by a tractor vehicle (1) from which a crane (2) extends, present in all practical embodiments of the invention and connected to two arcs (3), each arc (3) ending in an articulated mechanism (4) and each containing a pneumatic cylinder (6), which works passively, since it responds to possible obstacles that may appear on the cleaning surface without the need for any control system. Arc (3) is therefore understood as the support structure of the articulated mechanism (4) that allows for the mobility of the cleaning system (5), ensuring that said system is always in contact with the mirror. Said arc does not necessarily have to be a curved structure.

Each articulated mechanism (4) is attached to a cleaning system (5) by means of a rotary actuator (10). The articulated mechanism (4) is formed by bars that enable the cleaning system (5) to be attached to the arc (3). The arc (3), attached to the pneumatic cylinder (6), together with the sweeping elements (53a, 53b, 53c), enables cleaning to be carried out by dragging and speed to be increased since it absorbs the mechanical disturbances of the arm or crane (2).

Cleaning at a faster speed enables the homogeneity of the field to be increased, which enables operating more efficiently. The arc (3), the articulated mechanism (4) and the pneumatic cylinder (6) and the cleaning system itself (5) are very light and the operation of the pneumatic cylinder (6) is very quick, since it does not need any control system to respond to any obstacle.

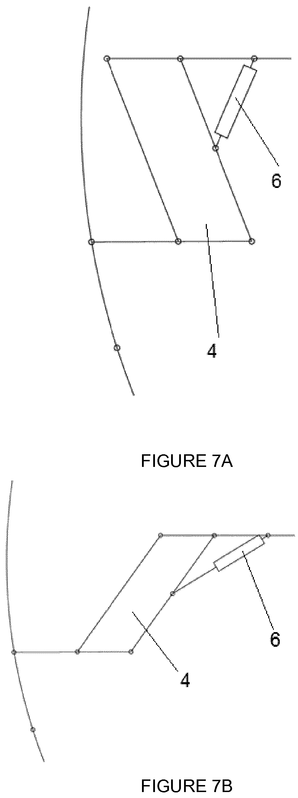

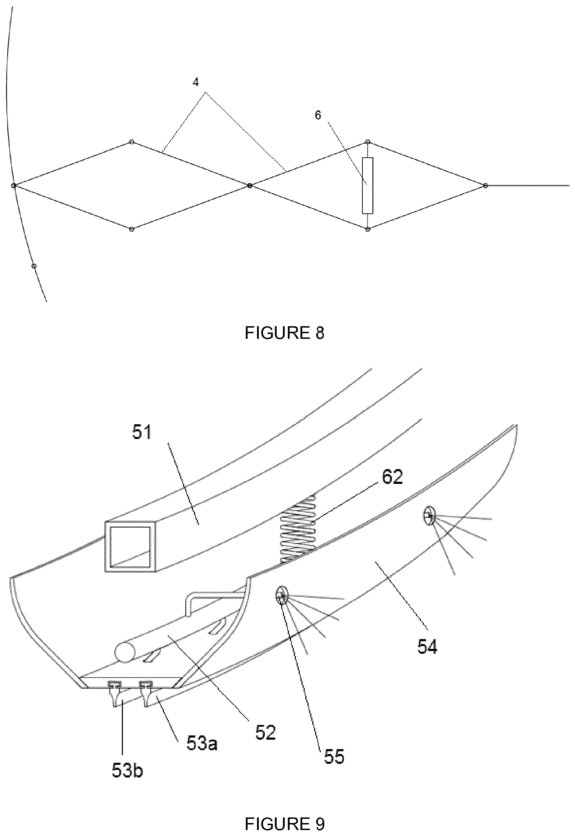

In a second embodiment (FIG. 2), the invention is formed by a cleaning vehicle formed by a tractor vehicle (1) from which a crane (2) extends, present in all practical embodiments of the invention and connected to two arcs (3) which each ends in an articulated mechanism (4) that works passively, since it responds to possible obstacles that may appear on the cleaning surface without the need for any control system. Each articulated mechanism (4) is attached to a cleaning system (5) by means of a rotary actuator (10). The articulated mechanism (4) is formed by bars that enable the cleaning system (5) to be attached to the arc (3) and which, together with the sweeping elements (53a, 53b, 53c), enables cleaning to be carried out by dragging and speed to be increased since it absorbs the mechanical disturbances of the arm or crane (2) (FIG 7A and FIG 7B). In an alternative embodiment, the articulated mechanism is formed by two series of bars that are interlocked and articulated to each other, by means of axes, at three connection points, at the ends thereof and at an intermediate point (FIG. 8).

In the first embodiment (FIG. 1) and in the second embodiment (FIG. 2), an articulated mechanism (4) has been used which can be any mechanism that enables the cleaning system (5) to move closer to and move away from the surface of the solar trackers or photovoltaic panels. This includes, but is not limited to, any mechanism with articulated bars, such as for example an extendable "scissor" type mechanism or a "rhombus" mechanism or any other equivalent mechanical solution.

The invention, in its third embodiment (FIG. 3), is formed by a cleaning vehicle formed by a tractor vehicle (1) from which a crane (2) extends, present in all practical embodiments of the invention and connected to two arcs (3), each arc ending in a pneumatic cylinder (6), and each containing an elastic element (7), which works passively, since it responds to possible obstacles that may appear on the cleaning surface without the need for any control system. Each elastic element (7) is attached to a cleaning system (5) by means of a rotary actuator (10).

In a fourth embodiment (FIG. 4), the invention is formed by a cleaning vehicle formed by a tractor vehicle (1) from which a crane (2) extends, present in all practical embodiments of the invention and connected to an arc (3) ending in a pneumatic cylinder (6). The pneumatic cylinder (6) is attached to a cleaning system (5) by means of a rotary actuator (10) that, along with the sweeping elements (53a, 53b, 53c), enables cleaning to be carried out by dragging and speed to be increased since it absorbs the mechanical disturbances of the arm or crane (2).

The cleaning (5) and drying systems can vary in length so that the vehicle will have at least one cleaning system to clean both the top and the bottom in a single sweep. In the case where the vehicle has more than one cleaning system (5), there is at least one available for cleaning the top and at least one available for cleaning the bottom. In the case of more than one cleaning system (5) in the top portion and/or bottom portion, said systems are attached to each other by means of a hinge that enables the cleaning system closest to the central portion to be removed in order to avoid any major obstacle, such as for example the supports of the receiving tubes in the case of parabolic trough collectors.

The cleaning system (5), as can be seen in Figure 5, is made up of a bearing profile (51) that connects, in this particular embodiment, the articulated mechanism (4) to the cleaning system (5).

This bearing profile (51) gives rigidity to the cleaning system (5). The curved bearing profile (51) is a machined profile preferably made of polyethylene (which may be fibreglass or carbon fibre in other practical embodiments) and consists of an inner portion in which at least one water conduit (52, 57) and optionally an air duct (59) are arranged.

This bearing profile (51) is curved in the case of parabolic trough collectors but can be flat if applied to heliostats or photovoltaic panels.

The cleaning system (5) has a side shield (54) attached to the bearing profile (51) that enables obstacles to be overcome without difficulty. In the case of parabolic trough collectors, this side shield (54) has a curved shape. This shield together with the use of sweeping elements (53a, 53b, 53c) that have a height (h) greater than 5 mm, 40 mm being a practical non-limiting embodiment, makes it so that proximity sensors from the arm or crane (2) to the mirror do not have to be used, nor does the cleaning system have to be removed when an obstacle or disturbance is detected, and without damaging the surface being cleaned, since the cleaning system has additional damping due to said height. On the outer portion of the bearing profile (51), which is in contact with the dirty surface, several rows of sweeping elements (53a, 53b, 53c) are arranged, having a height (h) greater than 5 mm and preferably being three in number (53a, 53b, 53c), wherein a first sweeping element and a second sweeping element (53a, 53b) clean and drag dirt while a third sweeping element (53c) is the one that leaves the surface dry. The sweeping elements (53a, 53b or 53c) may consist of an elastomer (61a, 61b or 61c) or an elastic element (60a, 60b or 60c) or a combination of both.

To moisten the surface, and preferably located between the side shield of the cleaning system (54) and the first sweeping element (53a), the end of the water conduit (57) is arranged so that, by gravity and by the very shape of the surface to be cleaned, the water soaks the entire surface via the diffuser (56). Between the first sweeping element (53a) and the second sweeping element (53b) there is a hole where the water sprayer (55) connected to the water conduit (52) is located and between the second sweeping element (53b) and the third sweeping element (53c) there are air diffusers (58). The sweeping elements (53a, 53b, 53c) due to their slender profile also function as a small damping system which enables the pressure to be distributed along the contact surface of the cleaning and drying system with the surface of the solar tracker or photovoltaic panels and which enables cleaning to be carried out by dragging.

In the cleaning process, in the case where the cleaning and drying system has a width equal to or less than the width of the gap (space between mirrors of the collector modules), or points of discontinuity between the surface or between the mirrors, the cleaning system (5) is placed at a certain inclination, between 10° and 45°, with respect to the surface or mirror to be cleaned so that, at the points of discontinuity between the surface or between the mirrors, the system does not have to stop and be removed. Thus, said empty space can be avoided and cleaning can then be quicker. In the case where the cleaning and drying system has a width greater than the width of the gap between mirrors, absorbing surfaces of trackers or photovoltaic modules, it will not be necessary to have said inclination, cleaning with the cleaning and drying system being able to be carried out vertically.

Next, the method for operating the cleaning system which cleans by dragging and drying mirrors or surfaces of photovoltaic solar trackers and photovoltaic modules is described:
a. placing the tractor vehicle parallel to a surface to be cleaned and extending at least one arc;
b. moving the cleaning system closer to the surface to be cleaned until the sweeping elements thereof come into contact with the surface to be cleaned; i. where the cleaning system has an inclination with respect to the surface to be cleaned comprised between 10° and 45°;
c. pouring water through at least one water diffuser;
d. spraying water through a water sprayer;
e. blowing air through an air diffuser connected to an air duct;
f. moving the tractor vehicle parallel to the surface to be cleaned so that the sweeping elements move the water and dry the surface in a single movement;
g. and wherein, in the case of finding an obstacle that cannot be avoided by the side shield, at least one of the following operations is performed: i. the cleaning system is moved towards the ends of the surface to be cleaned while avoiding the obstacle; and/ or ii. the cleaning system rotates around the obstacle; and/or iii. the cleaning system is placed parallel to the tractor vehicle, it is separated from the surface to be cleaned and, once the obstacle has been overcome, it is again placed on the surface to be cleaned with an inclination with respect to it comprised between 10° and 45°.

## Claims

1. A cleaning system (5) arranged for cleaning parabolic trough collectors, heliostats and photovoltaic panels comprising:
a support structure (4, 6, 7, 10) configured to be supported by an arc (3) connected to one end of a crane (2),
a bearing profile (51) consisting of an inner portion in which a plurality of water conduits (52, 57) is arranged; and a plurality of sweeping elements (53a, 53b, 53c) located on the outer portion of the bearing profile (51), wherein the cleaning is carried out by dragging and not in a floating manner, such that said cleaning system (5) is always in contact with the dirty surface of the parabolic trough collector, heliostat or photovoltaic panel; and
wherein a first group of sweeping elements (53a, 53b) is configured to clean and drag dirt while a second group of sweeping elements (53c) located next to the first group of sweeping elements (53a, 53b) is configured to dry the surface of the solar tracker or photovoltaic panel; and the sweeping elements (53a, 53b, 53c) comprise at least one elastomer (60a, 60b, 60c), or one elastic element (61a, 61b, 61c) or a combination thereof;
**characterized in** it further comprises a side shield (54) attached to the bearing profile (51) that enables obstacles to be overcome,
and **in that** between the first group of sweeping elements (53a, 53b) and the second group of sweeping elements (53c) there is an air diffuser (58) connected to an air duct (59) located inside the bearing profile (51).

2. The cleaning system (5) according to claim 1, wherein the sweeping elements (53a, 53b, 53c) have a height (h) greater than 5 mm.

3. The cleaning system (5) according to any one of claims 1 to 4, wherein between the side shield of the cleaning system (54) and a first row of sweeping elements (53a) there is a water diffuser (56) connected to a water conduit (57).

4. The cleaning system (5) according to any one of claims 1 to 5, wherein between the first row of sweeping elements (53a) and a second row of sweeping elements (53b) there is a hole where the water sprayer (55) connected to the water conduit (52) is located.

5. The cleaning system (5) according to any of the preceding claims, wherein the bearing profile (51) and the side shield (54) are curved.

6. A cleaning vehicle for parabolic trough collectors, heliostats and photovoltaic panels comprising a tractor vehicle (1) with a crane (2) connected at one end to an arc (3) that supports a support structure (4, 6, 7, 10), **characterized in that** said support structure (4, 6, 7, 10) comprises at the end thereof at least one cleaning system (5) according to any of claims 1 to 6.

7. The vehicle according to claim 6, comprising two support structures (4, 6, 7, 10) each comprising at the end thereof a cleaning system (5).

8. The vehicle according to any one of claims 6 and 7, comprising a support structure comprising at least one pneumatic cylinder (6) and at least one articulated mechanism (4).

9. The vehicle according to any one of claims 6 and 7, wherein the support structure comprises at least one pneumatic cylinder and at least one elastic element (7).

10. The vehicle according to any one of claims 6 and 7, wherein the support structure comprises at least one articulated mechanism (4).

11. The vehicle according to any one of claims 6 and 7, wherein the support structure comprises at least one pneumatic cylinder (6).

12. The vehicle according to any one of the preceding claims, wherein it comprises at least one rotary actuator (10) configured to enable the cleaning system (5) to rotate.

13. A method for cleaning parabolic trough collectors, heliostats and photovoltaic panels that is performed with a vehicle according to any one of claims 6 to 12 and comprising the steps of:
a. placing the tractor vehicle (1) parallel to a surface to be cleaned and extending at least one arc (3);
b. moving a cleaning system (5) according to any of claims 1 to 6 closer to the surface to be cleaned until the sweeping elements thereof (53a, 53b, 53c) come into contact with the surface to be cleaned;
i. where the cleaning system (5) has an inclination with respect to the surface to be cleaned comprised between 10° and 45°;
c. pouring water through at least one water diffuser (56);
d. spraying water through a water sprayer (55);
e. blowing air through an air diffuser (58) connected to an air duct (59);
f. moving the tractor vehicle (1) parallel to the surface to be cleaned so that the sweeping elements (53a, 53b, 53c) move the water and dry the surface in a single movement;
g. and wherein, in the case of finding an obstacle that cannot be avoided by the side shield (54), at least one of the following operations is performed:
i. the cleaning system (5) is moved towards the ends of the surface to be cleaned while avoiding the obstacle; and/or
ii. the cleaning system (5) rotates around the obstacle; and/or
iii. the cleaning system (5) is placed parallel to the tractor vehicle (1), it is separated from the surface to be cleaned and, once the obstacle has been overcome, it is again placed on the surface to be cleaned with an inclination with respect to it comprised between 10° and 45°.

## Patentansprüche

1. Reinigungssystem (5) zum Reinigen von Parabolrinnenkollektoren, Heliostaten und Photovoltaikmodulen, mit:
eine Stützstruktur (4, 6, 7, 10), die ausgebildet ist, von einem Bogen (3) getragen zu werden, der mit einem Ende eines Krans (2) verbunden ist,
einem Druckprofil (51), das aus einem inneren Abschnitt besteht, in dem mehrere Wasserleitungen (52, 57) angeordnet sind; und
mehreren Wischelemente (53a, 53b, 53c), die sich am äußeren Teil des Druckprofils (51) befinden, wobei die Reinigung durch Ziehen und nicht schwimmend durchgeführt wird, so dass das Reinigungssystem (5) immer in Kontakt mit der verschmutzten Oberfläche des Parabolrinnenkollektors, Heliostaten oder Photovoltaikmoduls steht; und
wobei eine erste Gruppe von Wischelementen (53a, 53b) ausgebildet ist, zu reinigen und Schmutz abzuschleifen, während eine zweite Gruppe von Wischelementen (53c), die neben der ersten Gruppe von Wischelementen (53a, 53b) angeordnet ist, ausgebildet ist, die Oberfläche des Heliostaten oder des Photovoltaikmoduls trocknet; und
die Wischelemente (53a, 53b, 53c) mindestens ein Elastomer (60a, 60b, 60c) oder ein elastisches Element (61a, 61b, 61c) oder eine Kombination davon aufweisen;
**dadurch gekennzeichnet, dass**
ferner eine seitliche Abschirmung (54) vorgesehen, die an dem Druckprofil (51) befestigt ist und die Überwindung von Hindernissen ermöglicht,
und sich zwischen der ersten Gruppe von Wischelementen (53a, 53b) und der zweiten Gruppe von Wischelementen (53c) ein Luftverteiler (58) befindet, der mit einem Luftkanal (59) verbunden ist, der sich innerhalb des Druckprofils (51) befindet.

2. Reinigungssystem (5) nach Anspruch 1, wobei die Wischelemente (53a, 53b, 53c) eine Höhe (h) von mehr als 5 mm aufweisen.

3. Reinigungssystem (5) nach einem der Ansprüche 1 bis 4, wobei zwischen der seitlichen Abschirmung des Reinigungssystems (54) und einer ersten Reihe von Wischelementen (53a) ein Wasserverteiler (56) vorgesehen ist, der mit einer Wasserleitung (57) verbunden ist.

4. Reinigungssystem (5) nach einem der Ansprüche 1 bis 5, wobei zwischen der ersten Reihe von Wischelementen (53a) und einer zweiten Reihe von Wischelementen (53b) eine Öffnung vorhanden ist, in der sich der mit der Wasserleitung (52) verbundene Wassersprüher (55) befindet.

5. Reinigungssystem (5) nach einem der vorstehenden Ansprüche, wobei das Druckprofil (51) und die seitliche Abschirmung (54) gekrümmt sind.

6. Reinigungsfahrzeug für Parabolrinnenkollektoren, Heliostaten und Photovoltaikmodule mit einem Zugfahrzeug (1) mit einem Kran (2), der an einem Ende mit einem Bogen (3) verbunden ist, der eine Stützstruktur (4, 6, 7, 10) trägt,
**dadurch gekennzeichnet, dass**
die Stützstruktur (4, 6, 7, 10) an ihrem Ende mindestens ein Reinigungssystem (5) gemäß einem der Ansprüche 1 bis 6 aufweist.

7. Fahrzeug nach Anspruch 6, das zwei Stützstrukturen (4, 6, 7, 10) aufweist, die jeweils an ihrem Ende ein Reinigungssystem (5) aufweisen.

8. Fahrzeug nach einem der Ansprüche 6 und 7 mit einer Stützstruktur, die mindestens einen Pneumatikzylinder (6) und mindestens einen Gelenkmechanismus (4) aufweist.

9. Fahrzeug nach einem der Ansprüche 6 und 7, wobei die Stützstruktur mindestens einen Pneumatikzylinder und mindestens ein elastisches Element (7) aufweist.

10. Fahrzeug nach einem der Ansprüche 6 und 7, wobei die Stützstruktur mindestens einen Gelenkmechanismus (4) aufweist.

11. Fahrzeug nach einem der Ansprüche 6 und 7, wobei die Stützstruktur mindestens einen Pneumatikzylinder (6) aufweist.

12. Fahrzeug nach einem der vorstehenden Ansprüche, das mindestens einen Drehantrieb (10) aufweist, der ausgebildet ist, das Reinigungssystem (5) zu drehen.

13. Verfahren zum Reinigen von Parabolrinnenkollektoren, Heliostaten und Photovoltaikmodulen, das mit einem Fahrzeug nach einem der Ansprüche 6 bis 12 durchgeführt wird und
die Schritte umfasst:
a. Anordnen des Zugfahrzeugs (1) parallel zu einer zu reinigenden Oberfläche und Ausfahren mindestens eines Bogens (3);
b. Bewegen eines Reinigungssystems (5) nach einem der Ansprüche 1 bis 6 näher an die zu reinigende Oberfläche, bis dessen Wischelemente (53a, 53b, 53c) mit der zu reinigenden Oberfläche in Kontakt kommen;
i. wobei das Reinigungssystem (5) eine Neigung in Bezug auf die zu reinigende Oberfläche zwischen 10° und 45° aufweist;
c. Ausgeben von Wasser durch mindestens einen Wasserverteiler (56);
d. Aufsprühen von Wasser durch einen Wassersprüher (55);
e. Ausblasen von Luft durch einen Luftverteiler (58), der mit einem Luftkanal (59) verbunden ist;
f. Bewegen des Zugfahrzeugs (1) parallel zu der zu reinigenden Oberfläche derart, dass die Wischelemente (53a, 53b, 53c) das Wasser verdrängen und die Oberfläche in einer einzigen Bewegung trocknen;
g. und wobei im Falle des Auffindens eines Hindernisses, das durch die seitliche Abschirmung (54) nicht umgangen werden kann, einer der folgenden Vorgänge durchgeführt wird:
i. Bewegen des Reinigungssystems (5) wird in Richtung der Enden der zu reinigenden Oberfläche, wobei das Hindernis umgangen wird; und/oder
ii. Drehen des Reinigungssystems (5) um das Hindernis herum; und/oder
iii. Positionieren des Reinigungssystems (5) parallel zu dem Zugfahrzeug (1), Trennen desselben von der zu reinigenden Oberfläche und, sobald das Hindernis überwunden ist, erneutes Aufsetzen des Reinigungssystems auf die zu reinigende Oberfläche mit einer
dazu bezüglichen Neigung von 10° bis 45°.

## Revendications

1. Système de nettoyage (5) agencé pour nettoyer des collecteurs cylindro-paraboliques, des héliostats et des panneaux photovoltaïques comprenant :
une structure de support (4, 6, 7, 10) configurée pour être supportée par un arc (3) raccordé à une extrémité d'une grue (2),
un profil porteur (51) se composant d'une partie interne dans laquelle une pluralité de conduits d'eau (52, 57) sont agencés ; et une pluralité d'éléments de balayage (53a, 53b, 53c) positionnés sur la partie externe du profil porteur (51), dans lequel le nettoyage est réalisé par mouvement de traînée et pas d'une manière flottante, de sorte que ledit système de nettoyage (5) est toujours en contact avec la surface sale du collecteur cylindro-parabolique, de l'héliostat ou du panneau photovoltaïque ; et
dans lequel un premier groupe d'éléments de balayage (53a, 53b) est configuré pour nettoyer et entraîner la saleté, alors qu'un deuxième groupe d'éléments de balayage (53c) positionné à proximité du premier groupe d'éléments de balayage (53a, 53b) est configuré pour sécher la surface du suiveur solaire ou du panneau photovoltaïque ; et les éléments de balayage (53a, 53b, 53c) comprennent au moins un élastomère (60a, 60b, 60c) ou un élément élastique (61a, 61b, 61c) ou une combinaison de ces derniers ;
**caractérisé en ce qu'**il comprend en outre une protection latérale (54) fixée au profil porteur (51) qui permet de franchir les obstacles,
et **en ce que**, entre le premier groupe d'éléments de balayage (53a, 53b) et le deuxième groupe d'éléments de balayage (53c), il y a un diffuseur d'air (58) raccordé à un conduit d'air (59) positionné à l'intérieur du profil porteur (51).

2. Système de nettoyage (5) selon la revendication 1, dans lequel les éléments de balayage (53a, 53b, 53c) ont une hauteur (h) supérieure à 5 mm.

3. Système de nettoyage (5) selon l'une quelconque des revendications 1 à 4, dans lequel entre la protection latérale du système de nettoyage (54) et une première rangée d'éléments de balayage (53a), il y a un diffuseur d'eau (56) raccordé à un conduit d'eau (57).

4. Système de nettoyage (5) selon l'une quelconque des revendications 1 à 5, dans lequel entre la première rangée d'éléments de balayage (53a) et une deuxième rangée d'éléments de balayage (53b), il y a un trou où le pulvérisateur d'eau (55) raccordé au conduit d'eau (52) est positionné.

5. Système de nettoyage (5) selon l'une quelconque des revendications précédentes, dans lequel le profil porteur (51) et la protection latérale (54) sont courbés.

6. Véhicule de nettoyage pour collecteurs cylindro-paraboliques, héliostats et panneaux photovoltaïques comprenant un véhicule tracteur (1) avec une grue (2) raccordée, au niveau d'une extrémité, à un arc (3) qui supporte une structure de support (4, 6, 7, 10), **caractérisé en ce que** ladite structure de support (4, 6, 7, 10) comprend, au niveau de son extrémité, au moins un système de nettoyage (5) selon l'une quelconque des revendications 1 à 6.

7. Véhicule selon la revendication 6, comprenant deux structures de support (4, 6, 7, 10) comprenant chacune, au niveau de leur extrémité, un système de nettoyage (5).

8. Véhicule selon l'une quelconque des revendications 6 et 7, comprenant une structure de support comprenant au moins un cylindre pneumatique (6) et au moins un mécanisme articulé (4).

9. Véhicule selon l'une quelconque des revendications 6 et 7, dans lequel la structure de support comprend au moins un cylindre pneumatique et au moins un élément élastique (7).

10. Véhicule selon l'une quelconque des revendications 6 et 7, dans lequel la structure de support comprend au moins un mécanisme articulé (4).

11. Véhicule selon l'une quelconque des revendications 6 et 7, dans lequel la structure de support comprend au moins un cylindre pneumatique (6).

12. Véhicule selon l'une quelconque des revendications précédentes, dans lequel il comprend au moins un actionneur rotatif (10) configuré pour permettre au système de nettoyage (5) de tourner.

13. Procédé pour nettoyer des collecteurs cylindro-paraboliques, des héliostats et des panneaux photovoltaïques qui est réalisé avec un véhicule selon l'une quelconque des revendications 6 à 12 et comprenant les étapes comprenant les faits de :
a. placer le véhicule tracteur (1) parallèle à une surface à nettoyer et s'étendant le long d'un arc (3) ;
b. déplacer un système de nettoyage (5) selon l'une quelconque des revendications 1 à 6 plus à proximité de la surface à nettoyer alors que ses éléments de balayage (53a, 53b, 53c) viennent en contact avec la surface à nettoyer ;
i. dans lequel le système de nettoyage (5) a une inclinaison par rapport à la surface à nettoyer comprise entre 10° et 45° ;
c. verser l'eau dans au moins un diffuseur d'eau (56) ;
d. pulvériser l'eau par le biais d'un pulvérisateur d'eau (55) ;
e. souffler l'air par le biais d'un diffuseur d'air (58) raccordé à un conduit d'air (59) ;
f. déplacer le véhicule tracteur (1) parallèle à la surface à nettoyer de sorte que les éléments de balayage (53a, 53b, 53c) déplacent l'eau et sèchent la surface en un seul mouvement ;
g. et dans lequel, dans le cas dans lequel il trouve un obstacle qui ne peut pas être évité par la protection latérale (54), au moins l'une des opérations suivantes est réalisée :
i. le système de nettoyage (5) est déplacé vers les extrémités de la surface à nettoyer tout en évitant l'obstacle ; et/ou
ii. le système de nettoyage (5) tourne autour de l'obstacle ; et/ou
iii. le système de nettoyage (5) est placé parallèlement au véhicule tracteur (1), il est séparé de la surface à nettoyer et une fois que l'obstacle a été franchi, il est à nouveau placé sur la surface à nettoyer avec une inclinaison par rapport à ce dernier comprise entre 10° et 45°.
